# FASCICULE DE BREVET EUROPEEN

(11) **EP 3 724 749 B1**
(45) Date de publication et mention de la délivrance du brevet: **26.01.2022**
(21) Numéro de dépôt: 18833941.0
(22) Date de dépôt: 14.12.2018
(51) Int. Cl.: G06F 3/042

(54) **APPAREIL POUR APPLICATION DE RÉALITÉ AUGMENTÉE**
GERÄT FÜR AUGMENTED REALITY ANWENDUNG
DEVICE FOR AUGMENTED REALITY APPLICATION

(30) Priorité: 14.12.2017 FR 1762132
(43) Date de publication de la demande: 21.10.2020
(73) Titulaire: Société BIC, 92110 Clichy (FR)
(72) Inventeur: ROUDAUT, Etienne, 92250 LA GARENNE COLOMBES (FR); FOLGOAS, Loïc, 75017 PARIS (FR)
(74) Mandataire: Cabinet Beau de Loménie
(86) Numéro de dépôt international: PCT/FR2018/053306
(87) Numéro de publication internationale: WO 2019/115979

(56) Documents cités:
- US-A1- 2004 046 744
- US-A1- 2014 362 052
- US-A1- 2015 169 134

## Description

### DOMAINE TECHNIQUE

Le présent exposé concerne un appareil pour des applications de réalité augmentée, configuré pour capter une première image et pour projeter une deuxième image sur une zone de travail. La réalité augmentée est une technologie consistant à superposer, éventuellement en temps réel, des informations complémentaires à des informations issues du monde réel.

### ARRIERE-PLAN TECHNOLOGIQUE

Les appareils pour application de réalité augmentée connus ne permettent en général pas d'application pour l'écriture/dessin aisée et/ou confortable. Il existe donc un besoin en ce sens.

US 2014/362052 divulgue un dispositif d'affichage d'image tactile. Le dispositif comprend : un projecteur d'image pour projeter une image affichée sur une surface située face au dispositif; une source de lumière à capteur tactile pour projeter de la lumière en définissant une plaque tactile au-dessus de l'image affichée; une caméra dirigée pour capturer une image à détection tactile composée par la lumière diffusée à partir de la plaque tactile par un objet s'approchant de l'image affichée; et un processeur de signaux pour traiter l'image à détection tactile afin d'identifier l'emplacement de l'objet par rapport à l'image affichée.

US 2015/169134 divulgue un procédé et un appareil personnalisés pour fournir une entrée à une plateforme informatique provenant d'un utilisateur. L'appareil comprend une plateforme informatique, un dispositif de projection pour projeter une image à afficher à un utilisateur, et un dispositif de capture pour capturer une réflexion de l'image ou d'une partie de celle-ci et une main ou des mains d'un utilisateur au voisinage de l'image projetée.

US 2004/046744 divulgue un utilisateur qui entre avec une main ou un stylet des informations dans un système complémentaire tel qu'un assistant numérique, un téléphone portable, un appareil ou un dispositif utilisant un dispositif d'entrée virtuel tel qu'une image d'un clavier. Un capteur capture des données représentant une seule image à un instant donné, à partir desquelles des informations de position tridimensionnelles telles que si, quand dans le temps, et où sur le dispositif d'entrée virtuel une interaction avec l'utilisateur ou un contact s'est produit.

### PRESENTATION

L'invention est définie par la revendication 1. Le présent exposé concerne un appareil configuré pour capter une première image et pour projeter une deuxième image, l'appareil comprenant :
- un support,
- une caméra configurée pour capter, ou un premier miroir configuré pour capter et réfléchir vers une caméra, une première image d'une zone de travail, la caméra ou le premier miroir étant monté sur le support,
- un projecteur configuré pour projeter, ou un deuxième miroir configuré pour réfléchir et projeter, une deuxième image sur la zone de travail, le projecteur ou le deuxième miroir étant monté sur le support.

On comprend donc que l'appareil comprend la caméra et le projeteur ou la caméra et le deuxième miroir, ou le premier miroir et le projecteur, ou encore le premier miroir et le deuxième miroir.

Lorsque l'appareil comprend la caméra, on comprend que la caméra, est configurée pour observer directement la zone de travail et capter la première image qui est représentative de la zone de travail. Autrement dit, la caméra capte directement la première image, et forme une caméra dite primaire.

Lorsque l'appareil comprend le premier miroir, on comprend que le premier miroir est configuré pour observer directement la zone de travail et capter la première image qui est représentative de la zone de travail. La caméra, qui bien entendu est différente de la caméra primaire, cette variante ne comprenant pas de caméra primaire, est configurée pour observer le premier miroir qui lui renvoie la première image et capter ainsi indirectement la première image via le miroir. La caméra forme ainsi une caméra secondaire. La caméra peut faire partie de l'appareil, ou bien faire partie d'un élément distinct de l'appareil.

En d'autres termes le premier miroir est dirigé vers la zone de travail de façon à capter directement et réfléchir la première image vers la caméra. Le premier miroir observe donc directement la zone de travail tandis que la caméra observe le miroir et capte indirectement la première image.

Lorsque l'appareil comprend le projecteur, on comprend que le projecteur, est configuré pour projeter directement la deuxième image dans la zone de travail. Autrement dit, le projecteur forme un projecteur dit primaire.

Lorsque l'appareil comprend le deuxième miroir, on comprend que le deuxième miroir est configuré pour projeter directement la deuxième image sur la zone de travail. Un projecteur, qui bien entendu est différent du projecteur primaire, cette variante ne comprenant pas de projecteur primaire, est configuré pour projeter sur le deuxième miroir la deuxième image, qui la réfléchit et la projette dans la zone de travail. Le projecteur forme ainsi un projecteur secondaire. Le projecteur peut faire partie de l'appareil, ou bien faire partie d'un élément distinct de l'appareil.

On entend par projecteur tout type d'instrument optique permettant la projection d'une image, par exemple un vidéoprojecteur.

On comprend que la première image de la zone de travail est une vue, ou une reproduction de la zone de travail à un instant donné. La première image correspond donc à une reproduction de la zone de travail, telle qu'elle apparaît dans le monde réel, à un instant donné.

On entend par zone de travail, une zone dans laquelle l'utilisateur de l'appareil souhaite réaliser une inscription sur un support de travail. En d'autres termes, la zone de travail est la zone vers laquelle pointe la caméra (primaire) ou le premier miroir et le deuxième miroir ou le projecteur (primaire). Le support de travail est donc en tout ou partie disposé dans la zone de travail. Par exemple, le support de travail comprend une surface bidimensionnelle ou tridimensionnelle, sur laquelle l'utilisateur souhaite réaliser une inscription. L'inscription peut être une écriture, un dessin, etc. Dans certains cas, la réalisation de l'inscription est déjà entamée sur le support de travail lorsque la première image est captée. Autrement dit, le support de travail peut comprendre au moins une inscription partielle formant une partie de l'inscription finale que souhaite réaliser l'utilisateur.

La deuxième image peut représenter par exemple au moins une portion non encore réalisée de l'inscription. La deuxième image, projetée dans la zone de travail, apparaîtra de telle sorte qu'elle sera « superposée » au support de travail, et à l'au moins une portion déjà réalisée de l'inscription, si celle-ci est déjà partiellement réalisée. La deuxième image sera donc projetée de façon à ce que l'au moins une portion de l'inscription non encore réalisée soit disposée à un endroit déterminé de la zone de travail. On comprend donc que la deuxième image est générée à partir d'un traitement de la première image et constitue une partie complémentaire de la première image.

L'appareil selon le présent exposé permet ainsi d'améliorer l'expérience de l'utilisateur pour des applications de réalité augmentée. En effet, l'utilisateur peut directement retranscrire au moins une portion de la deuxième image directement sur le support de travail, dans la zone de travail, sans avoir à consulter un modèle qui serait à l'extérieur de la zone de travail, en suivant un motif de la deuxième image. L'appareil est en outre simple à réaliser, et reproductible. L'appareil selon le présent exposé possède en outre une bonne ergonomie d'utilisation.

Dans certains modes de réalisation, le support présente un plan de pose destiné à venir en appui sur une surface de pose, et dans lequel un axe optique de la caméra est inclinée par rapport au plan de pose, l'angle entre l'axe optique de la caméra et le plan de pose est compris entre 45° (quarante-cinq degrés d'angle) et 90° (quatre-vingt-dix degrés d'angle), ou le premier miroir étant incliné par rapport au plan de pose, l'angle entre le premier miroir et le plan de pose est compris entre 0° (zéro degré d'angle) et 45° (quarante-cinq degrés d'angle).

On comprend que le support est configuré pour être posé sur une surface de pose. Par exemple, le support peut être posé sur un même plan que le support de travail. Par rapport à la position de l'utilisateur, lorsque celui-ci réalise l'inscription, la zone de travail est disposée juste devant le support.

Par exemple, le support comprend une embase configurée pour être disposée directement ou indirectement sur la surface de pose. L'embase peut être configurée pour supporter à elle toute seule le support et plus généralement, l'appareil. Selon une variante, une partie additionnelle, par exemple un pied, permet de maintenir le support en position sur la surface de pose, avec l'embase. Par exemple, l'embase présente une droite de contact linéaire ou deux points de contact définissant un plan de pose avec un point de contact du pied. Le plan de pose est le plan du support configuré pour être posé sur la surface de pose. On comprend que la surface de pose est la zone sur laquelle l'utilisateur souhaite disposer l'appareil. Ainsi, la surface de pose peut être formée par une surface plane, mais pas uniquement.

La caméra ou le premier miroir est monté sur le support de façon à être incliné d'un angle déterminé pour que la caméra ou le premier miroir observe la zone de travail et capte la première image. Un tel angle permet de pointer sur une zone de travail adjacente à l'appareil et intuitive pour l'utilisation de l'appareil. Ainsi, l'appareil est encore plus simple à utiliser, encore plus ergonomique et permet d'améliorer encore plus l'expérience de l'utilisateur pour une application de réalité augmentée.

Dans certains modes de réalisation, le centre géométrique d'une lentille externe de la caméra primaire est disposé à une hauteur, la hauteur correspondant à la distance entre le plan de pose et le centre géométrique de la caméra primaire, comprise entre 20 mm (vingt millimètres) et 400 mm (quatre cents millimètres) par rapport au plan de pose. Dans certains modes de réalisation, le centre géométrique de la lentille externe de la caméra primaire est disposé à une distance comprise entre 10 mm (dix millimètres) et 420 mm (quatre cent vingt millimètres) de la zone de travail, en projection sur une direction verticale. On comprend donc que le plan de pose et la zone de travail peuvent être inscrits dans le même plan, mais peuvent également être inscrits dans des plans différents.

Dans certains modes de réalisation, le centre géométrique du premier miroir est disposé à une hauteur comprise entre 20 mm (vingt millimètres) et 450 mm (quatre cent cinquante millimètres) par rapport au plan de pose. Dans certains modes de réalisation, le centre géométrique du premier miroir est disposé à une distance comprise entre 100 mm (cent millimètres) et 450 mm (quatre cent cinquante millimètres) de la zone de travail, en projection sur une direction verticale.

Dans certains modes de réalisation, le support présente un plan de pose destiné à venir en appui sur une surface de pose, dans lequel un axe optique du projecteur est incliné par rapport au plan de pose, l'angle entre l'axe optique du projecteur et le plan de pose est compris entre 50° (cinquante degrés d'angle) et 90° (quatre-vingt-dix degrés d'angle), ou dans lequel le deuxième miroir est incliné par rapport au plan de pose, l'angle entre le deuxième miroir et le plan de pose est compris entre 0° (zéro degré d'angle) et 40° (quarante degrés d'angle).

Le projeteur ou le deuxième miroir est donc monté sur le support de façon à être incliné d'un angle particulier pour que la projection soit réalisée dans la zone de travail. Un tel angle permet de pointer sur une zone de travail adjacente à l'appareil et intuitive pour l'utilisation de l'appareil. Ainsi, l'appareil est encore plus simple à utiliser, encore plus ergonomique et permet d'améliorer encore plus l'expérience de l'utilisateur pour une application de réalité augmentée.

Dans certains modes de réalisation, le centre géométrique d'une lentille externe du projecteur primaire est disposé à une hauteur comprise entre 50 mm (cinquante millimètres) et 400 mm (quatre cents millimètres) par rapport au plan de pose. Dans certains modes de réalisation, le centre géométrique de la lentille externe du projecteur primaire est disposé à une distance comprise entre 100 mm (cent millimètres) et 450 mm (quatre cent cinquante millimètres) de la zone de travail, en projection sur une direction verticale.

Dans certains modes de réalisation, un centre géométrique du deuxième miroir est disposé à une hauteur comprise entre 50 mm (cinquante millimètres) et 500 mm (cinq cents millimètres) par rapport au plan de pose. Dans certains modes de réalisation, le centre géométrique du deuxième miroir est disposé à une distance comprise entre 100 mm (cent millimètres) et 500 mm (cinq cents millimètres) de la zone de travail, en projection sur une direction verticale.

Dans certains modes de réalisation, l'appareil comprend une interface de communication montée sur le support configurée pour permettre la communication entre l'appareil et un dispositif distinct ou un réseau de communication.

L'interface de communication permet donc de connecter l'appareil à un dispositif distinct de l'appareil, ce dispositif pouvant être embarqué au sein de l'appareil ou non, par exemple un dispositif électronique de la vie courante, comme une tablette multimédia ou équivalent.

Au sens du présent exposé, par « tablette multimédia ou équivalent » on entend une tablette multimédia, un ordiphone (ou smartphone en anglais), un ordinateur portable comprenant un écran, de préférence tactile, équipé de préférence d'un organe optique et dont le clavier peut être escamotable ou amovible, ou tout autre dispositif électronique pouvant comprendre un écran et un organe optique intégrés. Une tablette multimédia est parfois désignée par tablette tactile, tablette électronique, ardoise électronique, tablette numérique, ou tout simplement tablette. Un ordiphone est parfois désignée par téléphone multifonction ou téléphone intelligent. Au sens du présent exposé l'IPad^{®} ou bien l'Iphone^{®}, de la marque Apple^{®}, forment des exemples de tablettes multimédias ou équivalents. Par la suite, et sauf indication contraire, par « tablette » on entend « tablette multimédia ou équivalent ». L'autre dispositif peut également être un ordinateur, par exemple fixe ou bien tout appareil comprenant une unité de calcul et/ou une interface utilisateur, telle qu'un écran.

Un réseau de communication peut par exemple être un réseau de communication téléphonique ou bien le réseau internet.

Par exemple, l'interface de communication peut être montée directement ou indirectement sur le support. Par exemple, l'interface de communication peut être montée sur un autre des éléments de l'appareil, eux même monté sur le support.

On comprend que l'interface de communication est configurée pour mettre en communication l'appareil avec le dispositif distinct, ou un réseau de communication. Autrement dit, l'appareil, c'est-à-dire l'un des éléments de l'appareil, est configuré pour communiquer avec le dispositif distinct ou un réseau de communication via l'interface de communication.

Par exemple, l'interface de communication peut permettre la communication entre la caméra primaire ou la caméra secondaire, et le projecteur primaire ou le projecteur secondaire et une unité de calcul extérieure à l'appareil, par exemple l'unité de calcul d'une tablette ou équivalent, lorsque l'appareil ne comprend pas d'unité de calcul.

Par exemple, l'interface de communication peut permettre la communication entre une unité de calcul de l'appareil, lorsque l'appareil comprend une unité de calcul, et une interface utilisateur déportée, par exemple l'interface utilisateur de l'autre dispositif.

Par exemple, l'interface de communication peut permettre la communication entre l'appareil et le réseau de communication. Par exemple, si l'appareil comprend une interface utilisateur, l'utilisateur pourra télécharger de nouveaux modèles d'inscription à partir du réseau de communication tel qu'internet.

Par exemple, l'interface de communication peut être une prise configurée pour recevoir une fiche ou bien un émetteur/récepteur, configuré pour émettre ou recevoir des informations par un protocole de communication de type WIFI, Li-Fi Bluetooth ou conforme à la norme IEEE 802.11, ou bien par un protocole de communication vers un réseau de téléphonie ou Internet.

Il suffit donc, pour l'utilisateur, de connecter l'appareil à ce dispositif distinct pour pouvoir l'utiliser, via l'appareil, pour des applications de réalité augmentée. Ainsi, l'appareil est encore plus simple à utiliser, encore plus ergonomique et permet d'améliorer encore plus l'expérience de l'utilisateur pour une application de réalité augmentée.

Dans certains modes de réalisation, différents éléments de la tablette comprennent chacun une interface de communication, dite « interface de communication interne », permettant de communiquer avec les autres éléments de l'appareil.

Dans certains modes de réalisation, l'appareil comprend une unité de calcul montée sur le support, l'unité de calcul étant configurée pour générer la deuxième image à partir de la première image.

On comprend que l'unité de calcul est intégrée à l'appareil, grâce à quoi l'appareil est autonome pour générer la deuxième image. Ceci permet d'améliorer encore plus la facilité d'utilisation de l'appareil et son ergonomie.

Selon une variante, l'appareil comprend une interface utilisateur, pour utiliser l'appareil. Par exemple, l'utilisateur peut choisir une inscription à réaliser à partir de l'interface utilisateur.

Selon l'invention, le support est configuré pour recevoir une tablette multimédia ou équivalent, équipé d'une caméra, le premier miroir étant mobile, de façon à venir en regard de la caméra de la tablette multimédia ou équivalent.

L'utilisateur peut ainsi disposer la tablette multimédia ou équivalent sur le support, face à lui lors de la réalisation de l'inscription. On comprend en outre, que la caméra de la tablette multimédia ou équivalent forme la caméra secondaire. Le premier miroir est mobile de façon à être disposé en regard de la caméra de la tablette. Ainsi, l'appareil est encore plus simple à utiliser, encore plus ergonomique et permet d'améliorer encore plus l'expérience de l'utilisateur pour une application de réalité augmentée. Par ailleurs, ceci permet de rendre l'appareil facilement adaptable à différents dispositifs déjà en possession de l'utilisateur.

Dans certains modes de réalisation, la caméra, ou le premier miroir est fixe sur le support.

La caméra ou le premier miroir est donc monté fixe sur le support afin de maintenir son inclinaison et sa position sur le support. Ainsi, l'appareil est encore plus simple à utiliser, encore plus ergonomique et permet d'améliorer encore plus l'expérience de l'utilisateur pour une application de réalité augmentée. L'appareil est en outre encore plus facile à fabriquer.

Dans certains modes de réalisation, le projecteur ou le deuxième miroir est fixe par rapport au support.

Le projecteur ou le deuxième miroir est donc monté fixe sur le support afin de maintenir son inclinaison et sa position sur le support. Ainsi, l'appareil est simple à utiliser, plus ergonomique et permet d'améliorer l'expérience de l'utilisateur pour une application de réalité augmentée. L'appareil est en outre plus facile à fabriquer.

Par exemple, la caméra secondaire appartient à l'appareil et est montée sur le support de manière fixe.

Dans certains modes de réalisation, la position relative entre la caméra primaire ou le premier miroir et le projecteur primaire ou le deuxième miroir est fixe. Ceci permet de diminuer la puissance de calcul nécessaire de l'unité de calcul et permet donc de proposer un appareil plus simple et moins cher.

Dans certains modes de réalisation, l'appareil comprend un projecteur (secondaire), configuré pour projeter la deuxième image vers le deuxième miroir.

Le projecteur secondaire est donc intégré à l'appareil. Ainsi, l'appareil est encore plus simple à utiliser, encore plus ergonomique et permet d'améliorer encore plus l'expérience de l'utilisateur pour une application de réalité augmentée. L'appareil est en outre encore plus facilement reproductible.

Le projecteur secondaire peut être fixe par rapport au deuxième miroir de façon à améliorer l'ergonomie et la reproductibilité de la tablette.

Dans certains modes de réalisation, l'appareil est configuré pour capter une première image ayant une surface comprise entre 100 cm² (cent centimètres carrés) et 1600 cm² (mille six cents centimètres carrés).

Dans certains modes de réalisation, l'appareil est configuré pour capter une première image disposée à une distance inférieure ou égale à 5 cm (cinq centimètres) du support.

Dans certains modes de réalisation, l'appareil est configuré pour que la projection de la deuxième image dans la zone de travail présente une surface comprise entre 225 cm² (deux cent vingt-cinq centimètres carrés) et 3000 cm² (trois mille centimètres carrés).

Dans certains modes de réalisation, l'appareil selon l'une des revendications précédentes, configuré pour que la projection de la deuxième image dans la zone de travail soit disposée à une distance inférieure ou égale à 20 cm (vingt centimètres) du support.

### BREVE DESCRIPTION DES DESSINS

L'objet du présent exposé et ses avantages seront mieux compris à la lecture de la description détaillée faite ci-après de différents exemples de réalisation donnés à titre d'exemples non limitatifs. Cette description fait référence aux pages de figures annexées, sur lesquelles :
- les figures 1A, 1B et 1C représentent un appareil selon un premier exemple de réalisation ;
- les figures 2A et 2B représentent un appareil selon un deuxième exemple de réalisation ;
- les figures 3A et 3B représentent un appareil selon un troisième exemple de réalisation ;
- la figure 4 représente un appareil selon un quatrième exemple de réalisation ;
- la figure 5 représente un appareil selon un cinquième exemple de réalisation.

### DESCRIPTION DETAILLEE

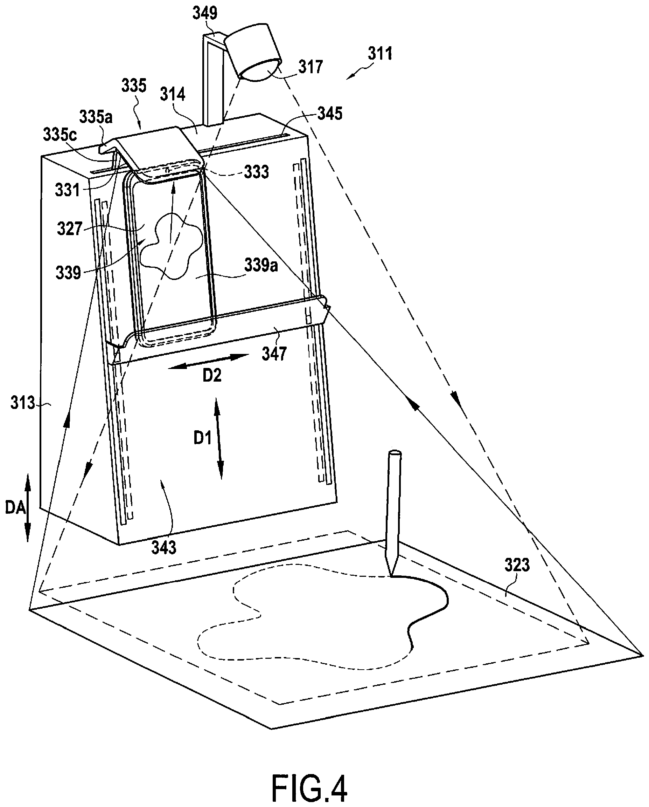

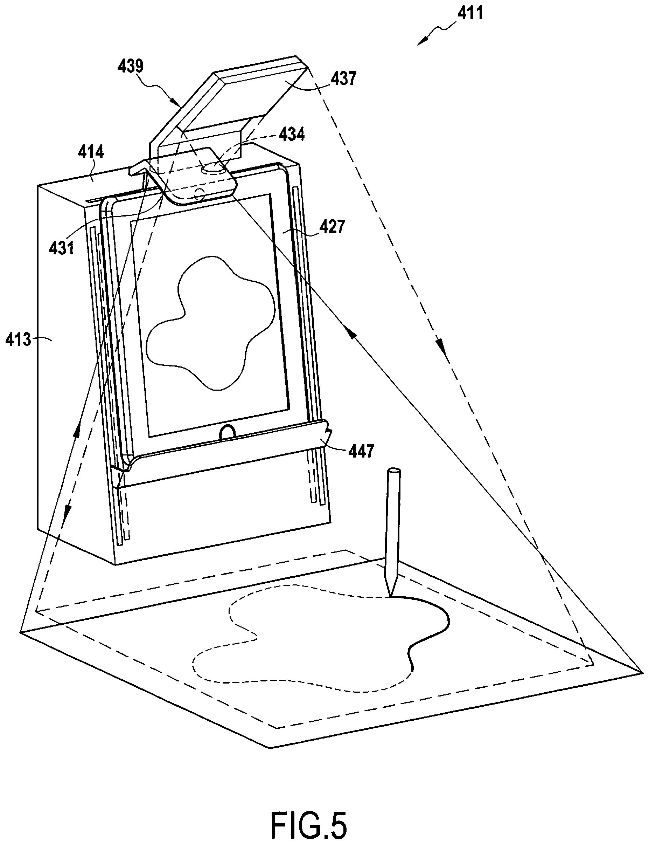

Les modes de réalisation et/ou exemples suivants qui ne seraient pas couverts par les revendications sont considérés comme ne faisant pas partie de la présente invention. L'invention telle que revendiquée est illustrée dans le contexte des Figures 4 et 5.

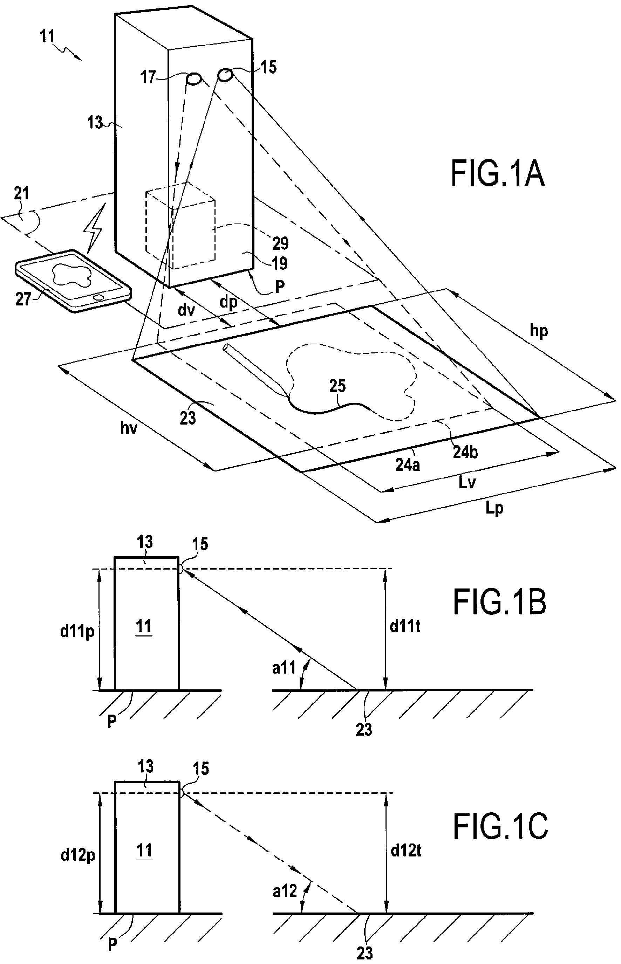

Les figures 1A à 1C représentent un appareil 11 selon un premier exemple de réalisation. Dans ce premier exemple de réalisation, l'appareil comprend un support 13, une caméra primaire 15 et un projecteur primaire 17, fixés sur le support 13. Le support 13 comprend une embase 19, définissant un plan de pose P. L'embase 19 est posée sur une surface de pose 21. Lorsque l'embase 19 est posée sur la surface de pose 21, le plan de pose P et la surface de pose 21 se confondent.

Face à l'appareil 11, se situe une zone de travail 23, dans laquelle un utilisateur souhaite réaliser une inscription 25. Pour choisir l'inscription qu'il souhaite réaliser, l'utilisateur peut disposer par exemple d'une tablette multimédia ou équivalent 27, ci-après « tablette », sur laquelle sont stockés plusieurs modèles d'inscription.

Le support 13 comprend, ici, une unité de calcul 29 et des interfaces de communication (non représentées), par exemple filaire ou sans fil de type « Bluetooth ». Ces interfaces de communication permettent à l'unité de calcul 29 de communiquer avec la tablette 27, la caméra primaire 15 et le projecteur primaire 17.

En effet, lorsque l'utilisateur choisi un modèle d'inscription à réaliser dans la zone de travail 23 grâce à la tablette 27, la tablette 27 transmet ce modèle à l'unité de calcul 29. L'unité de calcul 29 commande alors la caméra primaire 15 afin qu'elle capture une première image 24a de la zone de travail 23. La caméra primaire 15 transmet la première image 24a à l'unité de calcul 29. L'unité de calcul 29 traite alors cette première image afin d'y recaler le modèle d'inscription à réaliser, créant ainsi la deuxième image 24b. La deuxième image 24b est alors transmise au projecteur primaire17, qui la projette sur la zone de travail 23. L'utilisateur peut alors retranscrire l'inscription qu'il souhaite.

La première image 24a a une largeur hv comprise entre 100 mm (cent millimètres) et 400 mm (quatre cents millimètres), de préférence, la largeur hv est de 250 mm (deux cent cinquante millimètres). La première image 24a a une longueur Lv comprise entre 100 mm (cent millimètres) et 400 mm (quatre cents millimètres), de préférence, la longueur Lv est de 300 mm (trois cents millimètres). Par exemple, la première image 24a a une surface comprise entre 100 cm² (cent centimètres carrés) et 1600 cm² (mille six cents centimètres carrés).

La distance dv entre la première image 24a et le support 13 est comprise entre 0 mm (zéro millimètres) et 50 mm (cinquante millimètres), de préférence, la distance dv est de 0 mm (zéro millimètres).

Selon une variante, le traitement de la première image 24a de façon à générer la deuxième image 24b est réalisé par l'unité de calcul de la tablette 27. Dans ce cas, l'appareil peut ne pas comprendre d'unité de calcul.

La deuxième image 24b a une largeur hp comprise entre 150 mm (cent cinquante millimètres) et 500 mm (cinq cents millimètres), de préférence, la largeur hp est de 300 mm (trois cents millimètres). La deuxième image 24b a une longueur Lp comprise entre 150 mm (cent cinquante millimètres) et 600 mm (six cents millimètres), de préférence, la longueur Lv est de 300 mm (trois cents millimètres). Par exemple, la deuxième image 24b a une surface comprise entre 225 cm² (deux cent vingt-cinq centimètres carrés) et 3000 cm² (trois mille centimètres carrés).

La distance dp entre la deuxième image 24b et le support 13 est comprise entre 0 mm (zéro millimètres) et 200 mm (deux cents millimètres), de préférence, la distance dp est de 20 mm (vingt millimètres).

La caméra primaire 15 est dirigée vers la zone de travail 23 et son axe optique est incliné par rapport au plan de pose P d'un angle a11 d'environ 50° (cinquante degrés d'angle). Le projecteur primaire 17 est dirigé vers la zone de travail 23 et son axe optique est incliné par rapport au plan de pose P d'un angle a12 d'environ 69° (soixante-neuf degrés d'angle). La caméra primaire 15 est disposée à une hauteur d11p d'environ 320 mm (trois cents vingt millimètres) par rapport au plan de pose P. La caméra primaire 15 est disposée à une hauteur d11t d'environ 320 mm (trois cent vingt millimètres) par rapport à la zone de travail. Le projecteur primaire 17 est disposé à une hauteur d12p d'environ 381 mm (trois cents quatre-vingt-un millimètres) par rapport au plan de pose P. Le projecteur primaire 17 est disposé à une hauteur d12p d'environ 381 mm (trois cents quatre-vingt-un millimètres) par rapport au plan de pose P. Ici, la zone de travail 23 et le plan de pose P sont compris dans le même plan. Toutefois, il est possible que la zone de travail 23 et le plan de pose P soient disposés dans des plans différents et que la hauteur du projecteur primaire 17 et de la caméra primaire 15 soit différente si elle est mesurée à partir du plan de pose P ou bien à partir de la zone de travail 23.

Selon une variante, représentée sur la figure 1, la caméra 15 et le projecteur 17 sont disposés à une même hauteur par rapport au plan de pose P.

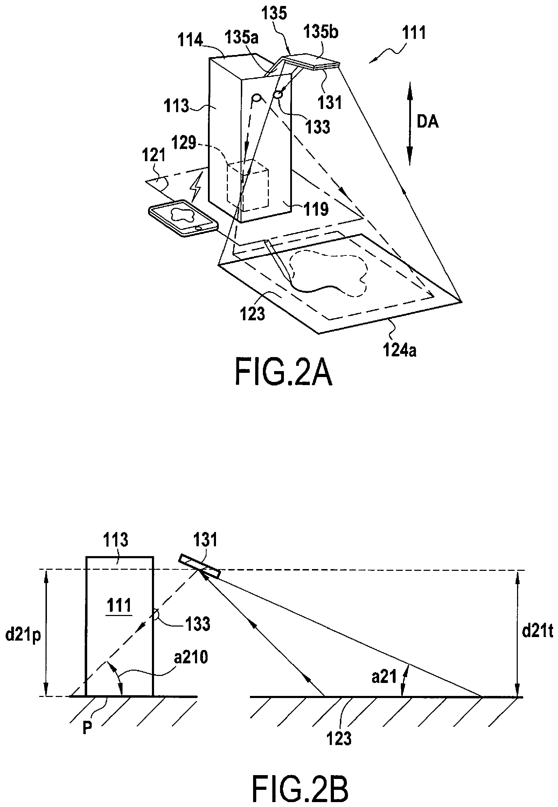

Les figures 2A et 2B représentent un deuxième exemple de réalisation de l'appareil selon le présent exposé. Dans le deuxième exemple de réalisation, au lieu d'une caméra primaire, l'appareil 111 comprend un premier miroir 131 et une caméra secondaire 133. La caméra secondaire 133 est montée sur le support 113 à la même place que la caméra primaire 15 dans le premier exemple de réalisation. Toutefois, la caméra secondaire 133 est orientée vers le premier miroir 131. L'axe optique de la caméra secondaire 133 est incliné par rapport au plan de pose P d'un angle a210 d'environ 10,5° (dix et demi degrés d'angle). Le premier miroir 131 est monté sur le support 113, face à la caméra secondaire 133. Le support 113 comprend un premier élément de montage 135 du premier miroir 131, via lequel le premier miroir 131 est monté sur le support 113. Ici, le premier élément de montage 135 a une forme générale de « V ». L'une des extrémités du premier élément de montage 135, c'est-à-dire une extrémité d'une première barre 135a du « V », est fixée à un bord supérieur 114 du support 113. Le bord supérieur 114 du support 113 est défini selon une direction DA de la hauteur du support 113 lorsque l'embase 119 est posée sur la surface de pose 121. Autrement dit, le bord supérieur 114 du support 113 est disposé à l'opposé de l'embase 119 selon la direction DA lorsqu'il est posé sur la surface de pose 121. Le premier miroir 131 est rapporté sur la deuxième barre 135b du « V » du premier élément de montage 135, à l'intérieur du « V ». Lorsqu'il est monté sur le premier élément de montage 135, le premier miroir 131 est incliné par rapport au plan de pose P d'un angle a21 d'environ 20° (vingt degrés d'angle). Le premier miroir 131 est disposé à une hauteur d21p d'environ 320 mm (trois cent vingt millimètres) par rapport au plan de pose P. Le projecteur primaire 17 est disposé à une hauteur d12t d'environ 320 mm (trois cent vingt millimètres) par rapport à la zone de travail 123.

Ainsi, la caméra secondaire 133 ne capte pas directement la première image 124a, mais la capte via le premier miroir 131. L'unité de calcul 129 est donc configurée pour communiquer avec la caméra secondaire 133.

Selon une variante, la caméra secondaire 133 pourrait ne pas être montée sur le support 113 mais être séparée et disposée en face du premier miroir 131.

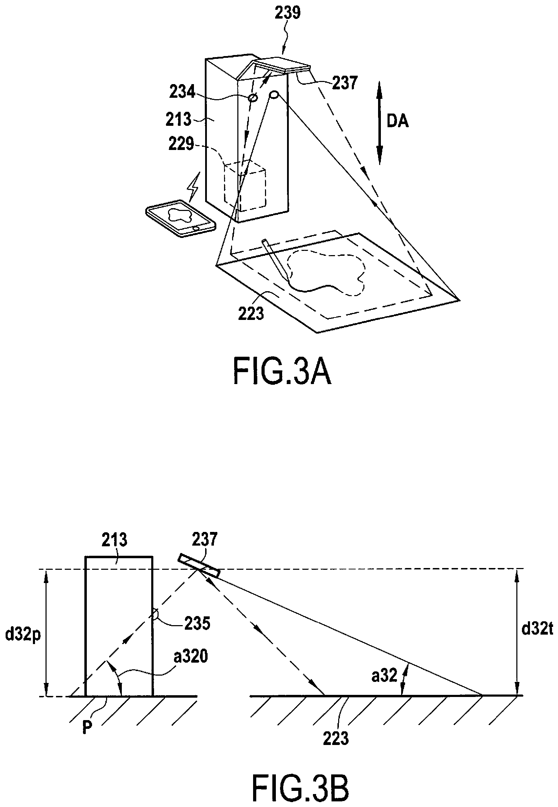

Les figures 3A et 3B représentent un troisième exemple de réalisation de l'appareil selon le présent exposé. Le troisième exemple de réalisation diffère du premier exemple de réalisation en ce qu'au lieu du projecteur primaire 17, l'appareil comprend un projecteur secondaire 234 et un deuxième miroir 237. Le projecteur secondaire 234 est disposé à la même place que le projecteur primaire 17 dans le premier exemple de réalisation. Toutefois, le projecteur secondaire 234 est orienté vers le deuxième miroir 237. L'axe optique du projecteur secondaire 235 est incliné par rapport au plan de pose P d'un angle a320 d'environ 15,5° (quinze et demi degrés d'angle). Le deuxième miroir 237 est monté sur le support 213 face au projecteur secondaire 234. Le support 213 comprend un deuxième élément de montage 239 du deuxième miroir 237, via lequel le deuxième miroir 237 est monté sur le support 213. Le deuxième élément de montage 239 a la même configuration que le premier élément de montage 135 du deuxième mode de réalisation, mais est disposé au niveau du projecteur secondaire 234. Ainsi, lorsqu'il est monté sur le deuxième élément de montage 239, le deuxième miroir 237 est incliné par rapport au plan de pose P d'un angle a32 d'environ 27° (vingt-sept degrés d'angle).

Le deuxième miroir 237 est disposé à une hauteur d32p d'environ 381 mm (trois cent quatre-vingt-un millimètres) par rapport au plan de pose P. Le deuxième miroir 237 est disposé à une hauteur d32t d'environ 381 mm (trois cent quatre-vingt-un millimètres) par rapport à la zone de travail 223.

Dans ce mode de réalisation, l'unité de calcul 229 est donc configurée pour communiquer avec le projecteur secondaire 234.

La figure 4 représente un quatrième exemple de réalisation, dans lequel la caméra secondaire décrite dans le deuxième exemple de réalisation, est constituée par la caméra 333 de la tablette 327. La tablette 327 est donc disposée sur le support 313 de telle sorte que la caméra 333 de la tablette 327 soit disposée en face du premier miroir 331.

La tablette 327 comprend une face avant 339, présentant un écran 339a, et une face arrière opposée à la face avant 339. La caméra 333 de la tablette 327 est adjacente à l'écran 339a sur la face avant 339.

Dans cet exemple de réalisation, le support 313 comprend une portion d'appui 343 qui est configurée pour recevoir la tablette 327. La portion d'appui 343 est plus particulièrement configurée pour coopérer avec la face arrière de la tablette 327 de façon à ce que l'écran 339a soit visible.

La portion d'appui 343 s'étend selon une première direction D1 et selon une deuxième direction D2 transversale à la première direction D1. L'inclinaison de la portion d'appui 11 par rapport à une normale au plan de pose P est inférieure à 20° (vingt degrés d'angle). La projection de la portion d'appui sur la normale au plan de pose P a une longueur de 330 mm (trois cents trente millimètres).

Le premier miroir 331 est déplaçable selon la deuxième direction D2. Ainsi, l'appareil 311 est polyvalent et peut s'adapter à différentes tailles et/ou configurations de tablette 327. Le premier miroir 331 est monté sur le support 313 comme décrit pour le deuxième mode de réalisation, mais de façon mobile. Ainsi, le premier élément de montage 335 comprend troisième barre 335c, fixée à la première barre 335a du « V ». Le support 313 comprend une glissière 345 dans laquelle peut s'insérer et coulisser la troisième barre 335c du premier élément de montage 335 de façon à permettre au premier miroir 331 de coulisser selon la deuxième direction D2. Ainsi, il est possible d'ajuster la position du premier miroir 331 pour que celui-ci se trouve en face de la caméra 333 de la tablette 327. L'angle entre le premier miroir 331 et la portion d'appui 343 est égal à 59,5° (cinquante-neuf et un demi degrés d'angle).

Selon une variante, le premier miroir 331 peut également être mobile par rapport au support 313 selon la première direction D1 ou selon la direction DA. Ainsi, l'appareil 311 serait plus polyvalent et pourrait mieux s'adapter à différentes tailles et/ou configurations de tablette 327.

Le support 313 comprend en outre une portion de support 347, configurée pour supporter la tablette 327, sur laquelle la tablette 327 est configurée pour reposer. La portion de support 347 est déplaçable selon la première direction D1 Ainsi, l'appareil 311 serait plus polyvalent et pourrait mieux s'adapter à différentes tailles et/ou configurations de tablette 327. Dans le mode de réalisation représenté, la portion de support 347 est déplaçable uniquement selon la première direction D1. La portion de support 347 s'étend de façon continue sur une portion de la largeur de la portion d'appui 343.

Comme dans le premier et le deuxième mode de réalisation, l'appareil 311 comprend ici un projecteur primaire 317. Le support 313 comprend un troisième élément de montage 349 permettant de monter le projecteur primaire 317 sur le support 313. Le troisième élément de montage 349 est fixé au bord supérieur 314 du support 313.

La figure 5 représente un cinquième exemple de réalisation. Le cinquième exemple de réalisation correspond au quatrième mode de réalisation, comprenant, à la place du projecteur primaire 317, un projecteur secondaire 434 et un deuxième miroir 437, comme cela est le cas dans le troisième exemple de réalisation. Le projecteur secondaire 434 est encastré dans le bord supérieur 414 du support 413. Le deuxième miroir 437 est monté sur le bord supérieur 414 du support 413, grâce à un deuxième élément de montage 439, similaire au deuxième élément de montage 239 du troisième mode de réalisation.

Sur la figure 5, on voit que la tablette 427 a des dimensions supérieures aux dimensions de la tablette 327 représentée en figure 4. Ainsi, grâce à la portion de portion de support 347, 447, et au premier miroir 331, 431 mobile, l'appareil 311, 411 peut s'adapter à différentes tailles et/ou configurations de tablette 327, 427, et est donc polyvalent.

Selon d'autres modes de réalisation, l'appareil 11 pourrait comprendre une interface utilisateur, par exemple un écran monté sur le support 13 et avec lequel l'utilisateur pourrait choisir l'inscription qu'il souhaite réaliser, à la place de la tablette. Dans ce cas, l'appareil pourrait comprendre une interface de communication permettant à l'appareil de se connecter à un réseau de type Internet afin que l'utilisateur puisse télécharger des modèles d'inscription depuis ce réseau, et faire des mises-à-jour logiciel mais pas nécessairement. L'appareil peut aussi être complétement autonome (i.e. interface utilisateur et unité de calcul intégrées).

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Appareil (11, 111, 311, 411) configuré pour capter une première image et pour projeter une deuxième image, l'appareil (11) comprenant :
- un support (13, 113, 213, 313, 413),
- un premier miroir (131, 331) configuré pour capter et réfléchir vers une caméra (133), une première image (24a, 124a) d'une zone de travail (23, 123, 223), le premier miroir (131, 331) étant monté sur le support (13, 113, 213, 313, 413),
- un projecteur (17, 317) configuré pour projeter, ou un deuxième miroir (237, 437) configuré pour réfléchir et projeter, une deuxième image (24b) sur la zone de travail (23, 123, 223), le projecteur (17, 317) ou le deuxième miroir (237, 437) étant monté sur le support (13, 113, 213, 313, 413),
- **caractérisé en ce que** le support (13, 113, 213, 313, 413) est configuré pour recevoir une tablette multimédia ou équivalent (27, 327), équipée d'une caméra (333), le premier miroir (131, 331) étant mobile, de façon à venir en regard de la caméra (333) de la tablette multimédia ou équivalent (27, 327).

2. Appareil selon la revendication 1, dans lequel le support (13, 113, 213, 313, 413) présente un plan de pose (P) destiné à venir en appui sur une surface de pose (21,121), et dans lequel un axe optique de la caméra (15) est inclinée par rapport au plan de pose (P), l'angle entre l'axe optique de la caméra (15) et le plan de pose (P) est compris entre 45°et 90°, ou dans lequel le premier miroir (131, 331) est incliné par rapport au plan de pose (P), l'angle entre le premier miroir (131, 331) et le plan de pose (P) est compris entre 0 et 45°.

3. Appareil selon la revendication 1 ou 2, dans lequel le support (13, 113, 213, 313, 413) présente un plan de pose (P) destiné à venir en appui sur une surface de pose (21, 121), dans lequel un axe optique du projecteur (17, 317) est incliné par rapport au plan de pose (P), l'angle entre l'axe optique du projecteur (17, 317) et le plan de pose (P) est compris entre 50° et 90°, ou dans lequel le deuxième miroir (237, 437) est incliné par rapport au plan de pose (P), l'angle entre le deuxième miroir (237, 437) et le plan de pose (P) est compris entre 0 et 40°.

4. Appareil selon l'une quelconque des revendications précédentes comprenant une interface de communication montée sur le support (13, 113, 213, 313, 413) configurée pour permettre la communication entre l'appareil (11, 111, 311, 411) et un dispositif distinct ou un réseau de communication

5. Appareil selon l'une quelconque des revendications précédentes, comprenant une unité de calcul (29) montée sur le support (13, 113, 213, 313, 413), l'unité de calcul (29) étant configurée pour générer la deuxième image (24b) à partir de la première image (24a, 124a).

6. Appareil selon l'une quelconque des revendications précédentes, dans lequel la caméra (15), ou le premier miroir (131, 331) est fixe sur le support (13, 113, 213, 313, 413).

7. Appareil selon l'une quelconque des revendications précédentes, dans lequel le projecteur (17, 317) ou le deuxième miroir (237, 437) est fixe par rapport au support (13, 113, 213, 313, 413).

8. Appareil selon l'une quelconque des revendications précédentes, dans laquelle la position relative entre la caméra (15) ou le premier miroir (131, 331) et le projecteur (17, 317) ou le deuxième miroir (237, 437) est fixe.

9. Appareil selon l'une quelconque des revendications précédentes, comprenant le deuxième miroir (237, 437) et un projecteur (234, 434) configuré pour projeter la deuxième image (24b) vers le deuxième miroir (237, 437).

10. Appareil selon l'une quelconque des revendications précédentes, configuré pour capter une première image (24a, 124a) ayant une surface comprise entre 100 cm² et 1600 cm².

11. Appareil selon l'une quelconque des revendications précédentes, configuré pour capter une première image (24a, 124a) disposée à une distance inférieure ou égale à 5 cm du support (13, 113, 213, 313, 413).

12. Appareil selon l'une quelconque des revendications précédentes, configuré pour que la projection de la deuxième image (24b) dans la zone de travail (23) présente une surface comprise entre 225 cm² et 3000 cm².

13. Appareil selon l'une quelconque des revendications précédentes, configuré pour que la projection de la deuxième image (24b) dans la zone de travail (23) soit disposée à une distance inférieure ou égale à 20 cm du support (13, 113, 213, 313, 413).

## Patentansprüche

1. Gerät (11, 111, 311, 411), das zum Erfassen eines ersten Bildes und zum Projizieren eines zweiten Bildes ausgelegt ist, wobei das Gerät (11) umfasst:
- einen Halter (13, 113, 213, 313, 413),
- einen ersten Spiegel (131, 331), der zum Erfassen und Reflektieren eines ersten Bildes (24a, 124a) eines Arbeitsbereichs (23, 123, 223) in Richtung einer Kamera (133) ausgelegt ist, wobei der erste Spiegel (131, 331) auf dem Halter (13, 113, 213, 313, 413) angebracht ist,
- einen Projektor (17, 317), der zum Projizieren ausgelegt ist, oder einen zweiten Spiegel (237, 437), der zum Reflektieren und Projizieren eines zweiten Bildes (24b) auf den Arbeitsbereich (23, 123, 223) ausgelegt ist, wobei der Projektor (17, 317) oder der zweite Spiegel (237, 437) auf dem Halter (13, 113, 213, 313, 413) angebracht ist,
- **dadurch gekennzeichnet, dass** der Halter (13, 113, 213, 313, 413) zum Empfangen eines Multimedia-Tablets oder eines Äquivalents (27, 327) ausgelegt ist, das mit einer Kamera (333) ausgestattet ist, wobei der erste Spiegel (131, 331) derart beweglich ist, dass er der Kamera (333) des Multimedia-Tablets oder des Äquivalents (27, 327) zugewandt ist.

2. Gerät nach Anspruch 1, wobei der Halter (13, 113, 213, 313, 413) eine Auflageebene (P) aufweist, die zum Abstützen auf einer Auflagefläche (21, 121) bestimmt ist, und wobei eine optische Achse der Kamera (15) im Verhältnis zur Auflageebene (P) geneigt ist, wobei der Winkel zwischen der optischen Achse der Kamera (15) und der Auflageebene (P) zwischen 45° und 90° liegt, oder wobei der erste Spiegel (131, 331) im Verhältnis zur Auflageebene (P) geneigt ist, wobei der Winkel zwischen dem ersten Spiegel (131, 331) und der Auflageebene (P) zwischen 0 und 45° liegt.

3. Gerät nach Anspruch 1 oder 2, wobei der Halter (13, 113, 213, 313, 413) eine Auflageebene (P) aufweist, die zum Abstützen auf einer Auflagefläche (21, 121) bestimmt ist, wobei eine optische Achse des Projektors (17, 317) im Verhältnis zur Auflageebene (P) geneigt ist, wobei der Winkel zwischen der optischen Achse des Projektors (17, 317) und der Auflageebene (P) zwischen 50° und 90° liegt, oder wobei der zweite Spiegel (237, 437) im Verhältnis zur Auflageebene (P) geneigt ist, wobei der Winkel zwischen dem zweiten Spiegel (237, 437) und der Auflageebene (P) zwischen 0 und 40° liegt.

4. Gerät nach einem der vorhergehenden Ansprüche, umfassend eine auf dem Halter (13, 113, 213, 313, 413) angebrachte Kommunikationsschnittstelle, die ausgelegt ist, um die Kommunikation zwischen dem Gerät (11, 111, 311, 411) und einem unterschiedlichen Gerät oder einem Kommunikationsnetzwerk zu gestatten.

5. Gerät nach einem der vorhergehenden Ansprüche, umfassend eine auf dem Halter (13, 113, 213, 313, 413) angebrachte Recheneinheit (29), wobei die Recheneinheit (29) ausgelegt ist, um das zweite Bild (24b) aus dem ersten Bild (24a, 124a) zu erzeugen.

6. Gerät nach einem der vorhergehenden Ansprüche, wobei die Kamera (15) oder der erste Spiegel (131, 331) auf dem Halter (13, 113, 213, 313, 413) fest ist.

7. Gerät nach einem der vorhergehenden Ansprüche, wobei der Projektor (17, 317) oder der zweite Spiegel (237, 437) im Verhältnis zum Halter (13, 113, 213, 313, 413) fest ist.

8. Gerät nach einem der vorhergehenden Ansprüche, wobei die relative Position zwischen der Kamera (15) oder dem ersten Spiegel (131, 331) und dem Projektor (17, 317) oder dem zweiten Spiegel (237, 437) fest ist.

9. Gerät nach einem der vorhergehenden Ansprüche, umfassend den zweiten Spiegel (237, 437) und einen Projektor (234, 434), der zum Projizieren des zweiten Bildes (24b) auf den zweiten Spiegel (237, 437) ausgelegt ist.

10. Gerät nach einem der vorhergehenden Ansprüche, das zum Erfassen eines ersten Bildes (24a, 124a) mit einer Fläche zwischen 100 cm² und 1600 cm² ausgelegt ist.

11. Gerät nach einem der vorhergehenden Ansprüche, das zum Erfassen eines ersten Bildes (24a, 124a) ausgelegt ist, das in einem Abstand von weniger als oder gleich 5 cm vom Halter (13, 113, 213, 313, 413) angeordnet ist.

12. Gerät nach einem der vorhergehenden Ansprüche, das ausgelegt ist, damit die Projektion des zweiten Bildes (24b) im Arbeitsbereich (23) eine Fläche aufweist, die zwischen 225 cm² und 3000 cm² liegt.

13. Gerät nach einem der vorhergehenden Ansprüche, das ausgelegt ist, damit die Projektion des zweiten Bildes (24b) im Arbeitsbereich (23) in einem Abstand von weniger als oder gleich 20 cm vom Halter (13, 113, 213, 313, 413) angeordnet ist.

## Claims

1. Apparatus (11, 111, 311, 411) configured to capture a first image and to project a second image, the apparatus (11) comprising:
- a support (13, 113, 213, 313, 413),
- a first mirror (131, 331) configured to capture a first image (24a, 124a) of a work region (23, 123, 223) and reflect said image to a camera (133), the first mirror (131, 331) being mounted on the support (13, 113, 213, 313, 413),
- a projector (17, 317) configured to project, or a second mirror (237, 437) configured to reflect and project, a second image (24b) on the work region (23, 123, 223), the projector (17, 317) or the second mirror (237, 437) being mounted on the support (13, 113, 213, 313, 413),
- **characterized in that** the support (13, 113, 213, 313, 413) is configured to receive a multimedia tablet or the like (27, 327) that is provided with a camera (333), the first mirror (131, 331) being movable so as to come to be opposite the camera (333) of the multimedia tablet or the like (27, 327).

2. Apparatus according to claim 1, wherein the support (13, 113, 213, 313, 413) has a positioning plane (P) intended to abut a positioning surface (21, 121), and wherein an optical axis of the camera (15) is inclined relative to the positioning plane (P), the angle between the optical axis of the camera (15) and the positioning plane (P) being between 45° and 90°, or wherein the first mirror (131, 331) is inclined relative to the positioning plane (P), the angle between the first mirror (131, 331) and the positioning plane (P) being between 0 and 45°.

3. Apparatus according to either claim 1 or claim 2, wherein the support (13, 113, 213, 313, 413) has a positioning plane (P) intended to abut a positioning surface (21, 121), wherein an optical axis of the projector (17, 317) is inclined relative to the positioning plane (P), the angle between the optical axis of the projector (17, 317) and the positioning plane (P) being between 50° and 90°, or wherein the second mirror (237, 437) is inclined relative to the positioning plane (P), the angle between the second mirror (237, 437) and the positioning plane (P) being between 0 and 40°.

4. Apparatus according to any of the preceding claims, comprising a communication interface mounted on the support (13, 113, 213, 313, 413) and configured to allow communication between the apparatus (11, 111, 311, 411) and a separate device or a communication network.

5. Apparatus according to any of the preceding claims, comprising a computing unit (29) mounted on the support (13, 113, 213, 313, 413), the computing unit (29) being configured to generate the second image (24b) from the first image (24a, 124a).

6. Apparatus according to any of the preceding claims, wherein the camera (15) or the first mirror (131, 331) is fixed on the support (13, 113, 213, 313, 413).

7. Apparatus according to any of the preceding claims, wherein the projector (17, 317) or the second mirror (237, 437) is fixed relative to the support (13, 113, 213, 313, 413).

8. Apparatus according to any of the preceding claims, wherein the relative position between the camera (15) or the first mirror (131, 331) and the projector (17, 317) or the second mirror (237, 437) is fixed.

9. Apparatus according to any of the preceding claims, comprising the second mirror (237, 437) and a projector (234, 434) configured to project the second image (24b) to the second mirror (237, 437).

10. Apparatus according to any of the preceding claims, configured to capture a first image (24a, 124a) having an area of between 100 cm² and 1,600 cm².

11. Apparatus according to any of the preceding claims, configured to capture a first image (24a, 124a) located at a distance of less than or equal to 5 cm from the support (13, 113, 213, 313, 413).

12. Apparatus according to any of the preceding claims, configured so that the projection of the second image (24b) in the work region (23) has an area of between 225 cm² and 3,000 cm².

13. Apparatus according to any of the preceding claims, configured so that the projection of the second image (24b) in the work region (23) is located at a distance of less than or equal to 20 cm from the support (13, 113, 213, 313, 413).
